(19) Europäisches Patentamt
European Patent Office
Office européen des brevets

(11) **EP 2 348 238 A1**

(12) **EUROPEAN PATENT APPLICATION**
published in accordance with Art. 153(4) EPC

(43) Date of publication:
**27.07.2011 Bulletin 2011/30**

(51) Int Cl.:
***F16K 31/53*** *(2006.01)*

(21) Application number: **09827396.4**

(86) International application number:
**PCT/JP2009/057866**

(22) Date of filing: **20.04.2009**

(87) International publication number:
**WO 2010/058615 (27.05.2010 Gazette 2010/21)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **19.11.2008 JP 2008295569**

(71) Applicant: **Oval Corporation**
**Tokyo 161-8508 (JP)**

(72) Inventors:
• **TACHIKAWA, Tomonari**
**Tokyo 161-8508 (JP)**
• **HASHIMOTO, Isamu**
**Tokyo 161-8508 (JP)**

(74) Representative: **Grünecker, Kinkeldey, Stockmair & Schwanhäusser Anwaltssozietät**
**Leopoldstrasse 4**
**80802 München (DE)**

(54) **TORQUE LIMITER AND VALVE ACTUATOR**

(57)    A torque limiter which can detect torque of both opening and closing of a valve and in which different torque values for opening and closing of the valve can be easily set. The torque limiter (17) is provided with a torque arm (171) having a connection section (171b) which is connected to a drive side gear (24) and an intermediate gear (23) and also having an arm section (171a) projecting from the connection section (171b); an open side spring means (172) and a closure side spring means (173) which apply spring force balancing with force acting, in proportion to torque of a load in opening and closing operation of the valve, in the direction of a tangential line at the meshing point of the intermediate gear (23); an open side torque detection switch (175) and a closure side torque detection switch (174) which are, when torque of a load in opening and closing operation of the valve exceeds a predetermined value, operated by the arm section (171a) ; and a torque limiter shaft (176) passed through the open and closure side spring means (172, 173) . The torque limiter shaft (176) is adapted such that spring force of each of the open and closure side spring means (172, 173) can be adjusted from an end of the torque limiter shaft (176).

FIG.4

EP 2 348 238 A1

## Description

TECHNICAL FIELD

The present invention relates to a torque limiter and a valve actuator, and, more particularly, to a torque limiter that detects a torque at the time of opening and closing of a valve to stop an air motor, and a valve actuator including the torque limiter.

BACKGROUND ART

Until now, a valve is opened and closed by a valve actuator in order to control flows of various fluids in process automation etc. The valve actuators include various types such as pneumatic, electric, hydraulic, and solenoid. The pneumatic type is used for a control valve that realizes a valve opening degree proportional to an input signal. A pneumatic valve actuator can easily generate much output power (drive force) while being simply structured and can provide an easy maintenance to a user.

Some of pneumatic valve actuators are known to include a torque limiter as a means for stopping driving in association with valve closure. This torque limiter has a purpose to close a valve at a proper torque as described in Patent Document 1, for example, and employs a spring balance system to accurately detect a shutoff torque of the valve and is configured to stop an air motor when a predetermined torque is obtained. Therefore, damage and destruction of a valve can be prevented from occurring due to excessive fastening of the valve.

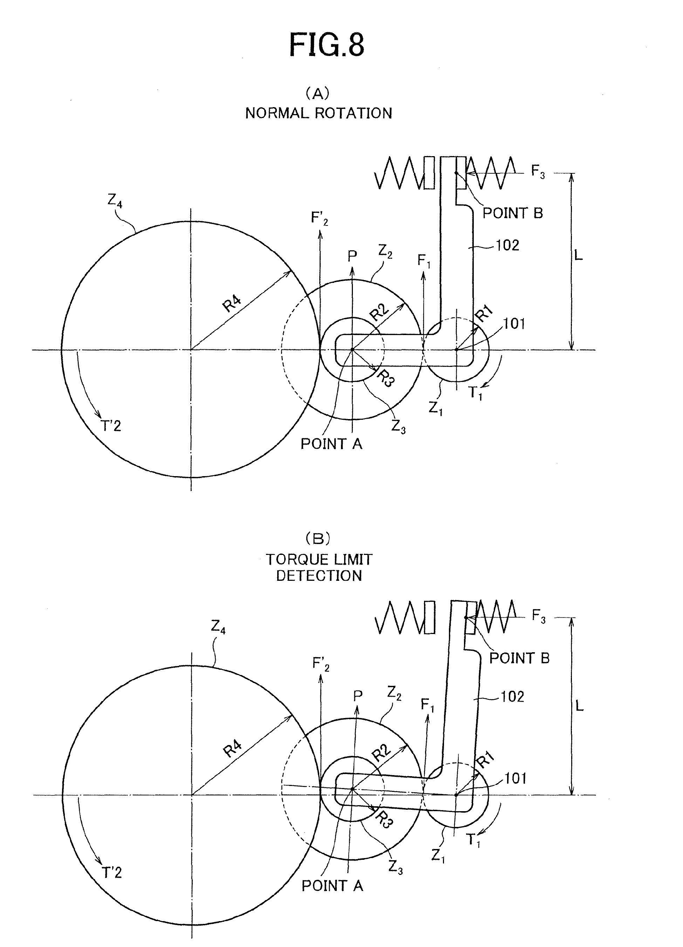

Fig. 8 is a diagram for explaining an operating principle of a torque limiter. In Fig. 8, 101 denotes a fulcrum; 102 denotes a torque arm; $Z_1$ to $Z_4$ denote gears; $R_1$ to $R_4$ denote pitch circle radii of the gears; and L denotes a distance from the fulcrum 101 to a point B of the torque arm 102. The torque arm 102 is coupled to the gear $Z_1$ at the fulcrum 101 to form a fulcrum of the operation, is coupled to the gears $Z_2$ and $Z_3$ at a point A of the torque arm 102, and receives a spring force at a point B of the torque arm 102.

When $T_1$ is a shaft torque of the gear $Z_1$; $T'_2$ is a reaction shaft torque of the gear $Z_4$; $F_1$ is an engagement tangential force applied to the gear $Z_2$; $F'_2$ is an engagement tangential force applied to the gear $Z_3$; P is a turning force applied to the point A of the torque arm 120 with the fulcrum 101 as a fulcrum; and $F_3$ is a spring force applied to the point B of the torque arm 102, the following equations are satisfied:

$$F_1 = T_1 / R_1 ;$$

$$F'_2 = T'_2 / R_4 ;$$

and

$$P = F_1 + F'_2$$

From the equations, the following equation is satisfied at the time of normal rotation shown in Fig. 8(A):

$$P \times (R_1 + R_2) \leq F_3 \times L_1$$

The following equation is satisfied at the time of detection of torque limit shown in Fig. 8(B):

$$P \times (R_1 + R_2) > F_3 \times L_1$$

A torque is detected in a shaft spring balance system, wherein three shafts with the gears ($Z_1$ to $Z_4$) engaged with each other are arranged in a straight line as described above, the gear engagement tangential forces such as $F_1$ and $F'_2$ are generated when a load is applied to the gear $Z_1$ and a shaft reaction force P ($|P|=|F_1|+|F'_2|$) thereto is balanced by a disc spring.

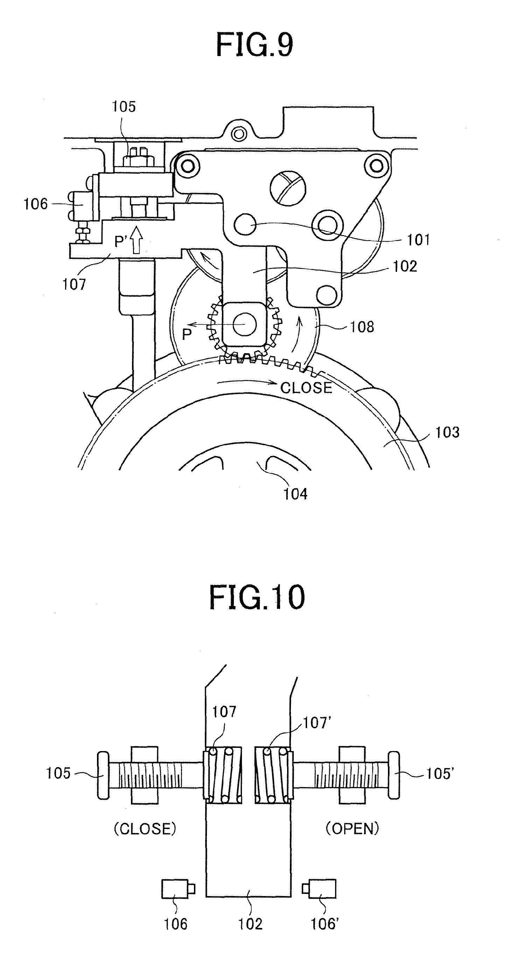

Fig. 9 is a diagram for explaining an operating state of a torque limiter at the time of closing the valve. This torque limiter is assumed to operate based on the operating principle described in Fig. 8. In Fig. 9, 101 denotes a fulcrum; 102 denotes a torque arm; 103 denotes a load side gear; 104 denotes a load side drive shaft; 105 is a torque adjustment screw; 106 is a torque detection switch; 107 is a torque balance disc spring (built into the torque arm 102); and 108 denotes an intermediate gear.

In Fig. 9, the torque arm 102 is supported by the fulcrum 101 and set to a predetermined torque value by the torque adjustment screw 105. When the valve is completely closed, a valve plug comes into contact with a valve seat and a load applied to the torque limiter is drastically increased. At the moment when this load reaches a torque set in advance, the intermediate gear 108 engaged with the load side gear 103 of the load side drive shaft 104 and the torque arm 102 are pushed toward P' in Fig. 9 to turn on the torque detection switch 106. If the torque detection switch 106 is turned on, a master valve (not depicted) is actuated and, when an air motor (not depicted) is stopped, the rotation of the load side drive shaft 104 is halted and the closing operation of the torque limiter is completed.

PRIOR ART DOCUMENTS

PATENT DOCUMENT

Patent Document 1: Japanese Patent Publication No. 7-31090

## DISCLOSURE OF THE INVENTION

## PROBLEMS TO BE SOLVED BY THE INVENTION

Although a torque limiter mounted on a conventional pneumatic valve actuator detects a torque at the time of shutoff of a valve (on the closure side) to stop an air motor, since an air microswitch detects a position on the open side of the valve to stop the air motor, if a failure occurs such as a malfunction of the air microswitch, the air motor is not stopped and may cause the damage or destruction of the valve, posing a risk of leading to a serious accident.

In this regard, it is conceivable to dispose torque limiters on both the open and closure sides. In this case, a different torque value must be adjusted for each of the torque limiters on the open and closure sides. This will be described with reference to Fig. 10.

Fig. 10 is a schematic of a configuration when torque limiters are disposed on both the open and closure sides. In Fig. 10, 102 denotes a torque arm; 105 denotes a torque adjustment screw on the closure side; 105' denotes a torque adjustment screw on the open side; 106 denotes a torque detection switch on the closure side; and 106' denotes a torque detection switch on the open side. If the torque limiters are disposed on both the open and closure sides in this way, although the torque adjustment must be performed from both sides by the torque adjustment screws 105 and 105' on the open and closure sides, the torque limiters are housed in a casing not depicted after the completion of assembly and the torque limiters becomes inaccessible from the outside. Therefore, if the torque adjustment is performed in pre-shipment inspection after the completion of assembly or the torque adjustment is performed on site after delivery to a customer, the casing must be removed each time, causing a problem of very poor workability.

The present invention was conceived in view of the situations and it is therefore an object of the present invention to provide a torque limiter that enables torque detection at both the opening and closing of a valve and that allows different torque values for the opening and closing to be easily adjusted, and a valve actuator including the torque limiter.

## MEANS FOR SOLVING THE PROBLEM

In order to solve the above problem, a first technical means is a torque limiter built into a valve actuator that has a load side gear for rotating a load, a drive side gear for driving the load side gear, and an intermediate gear that transmits rotation of the drive side gear to the load side gear and controls a valve coupled via a drive shaft to the load side gear to open/close, and the torque limiter comprising a torque arm consisting of a coupling portion coupled to the drive side gear and the intermediate gear and an arm portion projected from the coupling portion; an open side spring means that applies to the arm portion a spring force balanced with a force acting in an engagement tangential direction of the intermediate gear in proportion to a torque of the load at the time of the opening operation of the valve; a closure side spring means that applies to the arm portion a spring force balanced with a force acting in an engagement tangential direction of the intermediate gear in proportion to a torque of the load at the time of the closing operation of the valve; an open side torque detection switch operated by the arm portion when a torque of the load at the time of the opening operation of the valve exceeds a predetermined value; an closure side torque detection switch operated by the arm portion when a torque of the load at the time of the closing operation of the valve exceeds a predetermined value; and a torque limiter shaft that penetrates the open side spring means and the closure side spring means, wherein the torque limiter shaft enables adjustment of each of the spring force of the open side spring means and the spring force of the closure side spring means from one end of the torque limiter shaft.

A second technical means is the torque limiter of the first technical means, wherein the torque limiter shaft is made up of an open side adjustment shaft penetrating an open side moving piece biased by the open side spring means and a closure side adjustment shaft disposed coaxially with the open side adjustment shaft and penetrating a closure side moving piece biased by the closure side spring means, and the open side adjustment shaft and the closure side adjustment shaft are able to rotate independently of each other, the open side moving piece is moved by rotating the open side adjustment shaft to adjust the spring force of the open side spring means, and the closure side moving piece is moved by rotating the closure side adjustment shaft to adjust the spring force of the closure side spring means.

A third technical means is the torque limiter of the second technical means comprising a rotation stopping means to prevent the closure side moving piece and the open side moving piece from rotating together.

A fourth technical means is a valve actuator that incorporates the torque limiter of any one of the first to third technical means.

A fifth technical means is the valve actuator of the fourth technical means, wherein an opening portion is disposed on a side surface, and one end of the torque limiter shaft is disposed in the vicinity of the opening portion.

## EFFECT OF THE INVENTION

Since the present invention enables torque detection at both the opening and closing of a valve and allows different torque values for the opening and closing to be adjusted from one end of the torque limiter shaft, the torque adjustment work can efficiently be performed in pre-shipment inspection after the completion of assembly or on site after delivery to a customer.

BRIEF DESCRIPTION OF DRAWINGS

[Fig. 1] Fig. 1 is an external view of an example of a pneumatic valve control valve including a valve actuator to which the present invention is applied.
[Fig. 2] Fig. 2 is a diagram of the pneumatic valve control valve of Fig. 1 when viewed from the direction of X.
[Fig. 3] Fig. 3 is a diagram of an example of an internal configuration of a valve actuator according to the present invention when viewed from the top side.
[Fig. 4] Fig. 4 is a diagram of an example of a peripheral portion of a torque limiter built into the valve actuator depicted in Fig. 3.
[Fig. 5] Fig. 5 is a diagram of a detailed exemplary configuration of the torque limiter according to the present invention.
[Fig. 6] Fig. 6 is a diagram of an opening portion of the valve actuator depicted in Fig. 4 when viewed from the direction of Y.
[Fig. 7] Fig. 7 is a block diagram of an exemplary configuration of a pneumatic valve control valve system including the valve actuator to which the present invention is applied.
[Fig. 8] Fig. 8 is a diagram for explaining an operating principle of a torque limiter.
[Fig. 9] Fig. 9 is a diagram for explaining an operating state of the torque limiter at the time of closing the valve.
[Fig. 10] Fig. 10 is a schematic of a configuration when torque limiters are disposed on both the open and closure sides.

PREFERRED EMBODIMENTS OF THE INVENTION

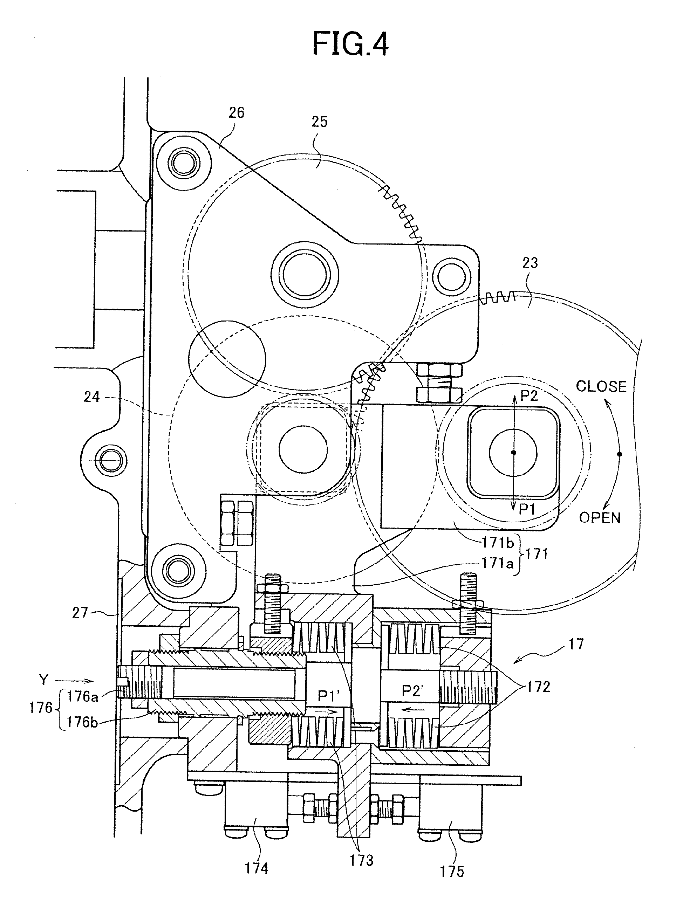

Preferred embodiments of a torque limiter and a valve actuator including the torque limiter of the present invention will now be described with reference to the accompanying drawings.

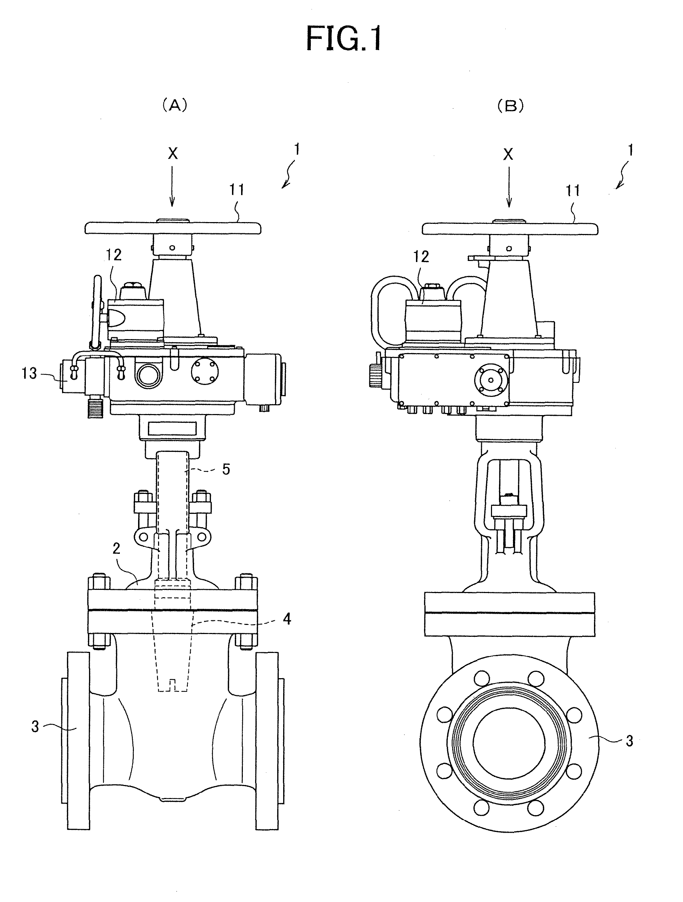

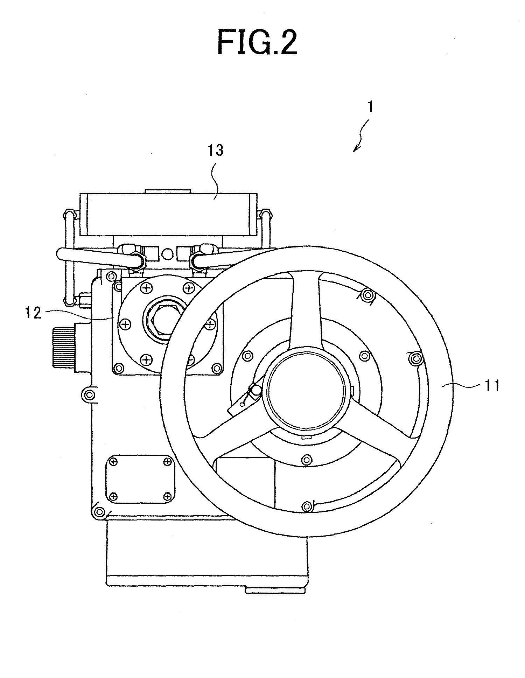

Fig. 1 is an external view of an example of a pneumatic valve control valve including a valve actuator to which the present invention is applied. Fig. 2 is a diagram of the pneumatic valve control valve of Fig. 1 when viewed from the direction of X. In Figs. 1 and 2, 1 denotes a valve actuator; 2 denotes a valve bonnet; 3 denotes a valve body; 4 denotes a valve disc; and 5 denotes a load side drive shaft. The valve actuator 1 includes a handle 11, an air motor 12, and a master valve 13.
In Fig. 1, the valve disc 4 for controlling a flow of fluid is disposed inside the valve body 3 in which fluids such as oils flow. This valve disc 4 is coupled to the handle 11 via the load side drive shaft 5. In the case of automatic operation, the air motor 12 is operated from a switch box (not depicted) to rotate the load side drive shaft 5 and the valve disc 4 is vertically moved via the load side drive shaft 5. In the case of manual operation, the handle 11 is manually operated to rotate the load side drive shaft 5 and the valve disc 4 is vertically moved via the load side drive shaft 5. The completely closed state is achieved when the valve disc 4 reaches the lower portion of the valve body 3, and the completely opened state is achieved when the valve disc 4 reaches the upper portion of the valve bonnet 2.
The valve actuator 1 incorporates a torque limiter (described later) dealing with both opening and closing of the valve disc 4. This torque limiter includes torque detection switches for opening and closing and, when the torque detection switch on the closure side is turned on, the master valve 13 is actuated to stop the air motor 12, and the rotation of the load side drive shaft 5 is halted to complete the closing operation of the torque limiter. Similarly, in the opening operation, when the torque detection switch on the open side is turned on, the master valve 13 is actuated to stop the air motor 12, and the rotation of the load side drive shaft 5 is halted to complete the opening operation of the torque limiter.

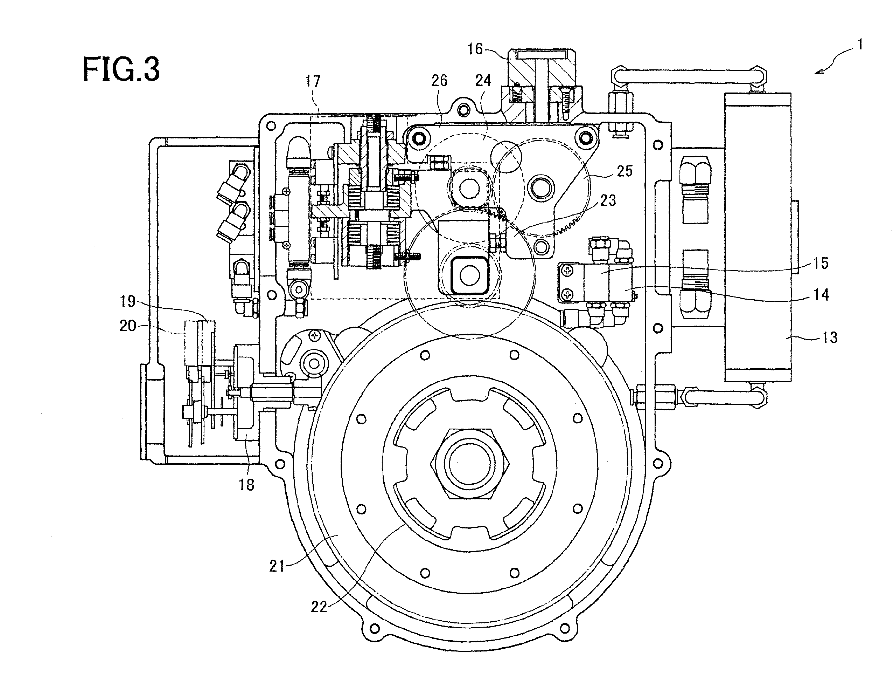

Fig. 3 is a diagram of an example of an internal configuration of a valve actuator 1 according to the present invention when viewed from the top side. The valve actuator 1 includes the master valve 13, a closure side logic valve (LVC) 14, an open side logic valve (LVO) 15, a manual/automatic switching knob 16, a torque limiter 17, an indicating portion 18, a totally closed position detection switch 19, a fully opened position detection switch 20, a load side gear 21, a load side drive shaft 22 (corresponding to the load side drive shaft 5), an intermediate gear 23, a drive side gear 24, a second gear 25, and a deceleration plate 26.
The master valve 13 controls the operation of the air motor 12 in accordance with an instruction from the LVC 14 or the LVO 15.
When a closing operation signal is received from an open/close selector of the switch box (not depicted), the LVC 14 instructs the master valve 13 to control the air motor 12 toward the closure side.
When an opening operation signal is received from the open/close selector of the switch box (not depicted), the LVO 15 instructs the master valve 13 to control the air motor 12 toward the open side.
The manual/automatic switching knob 16 is a switching means for switching between the manual operation of opening/closing a valve through the operation of the handle 11 and the automatic operation of opening/closing the valve with the air motor 12.
The torque limiter 17 is a mechanism that detects a proper torque that is necessary for opening and closing the valve, respectively, at the time when the valve is opened and closed to stop the air motor 12. The torque limiter 17 will be described later in detail with reference to Figs. 4 to 6.
The indicating portion 18 acquires the number of rotations of the load side gear 21 and indicates the number to the totally closed position detection switch 19 and the fully opened position detection switch 20.

The totally closed position detection switch 19 is a microswitch that detects when the number of rotations (position) of the load side gear 21 acquired by the indicating portion 18 reaches the number of rotations corresponding to the completely closed position.

The fully opened position detection switch 20 is a microswitch that detects when the number of rotations (position) of the load side gear 21 acquired by the indicating portion 18 reaches the number of rotations corresponding to the completely opened position. The air motor 12 may be stopped by the completely opened position detection switch 20 at the time of the normal opening operation and the open side torque limiter may stop the air motor 12 as a backup in the case that a failure occurs in this microswitch.

The load side gear 21 is a gear coupled to a valve (not depicted) via the load side drive shaft 22 for rotating a load. The drive side gear 24 is a gear for driving the load side gear 21. The intermediate gear 23 is a gear that transmits the rotation of the drive side gear 24 to the load side gear 21. The intermediate gear 23 of this example is made up of two gears, which are a gear engaged with the load side gear 21 and a gear engaged with the drive side gear 24. The second gear 25 is coupled to the air motor 12 to transmit the drive force of the air motor 12 to the drive side gear 24. The second gear 25, the drive side gear 24, and the intermediate gear 23 are fixed by the deceleration plate 26.

Fig. 4 is a diagram of an example of a peripheral portion of the torque limiter 17 built into the valve actuator 1 depicted in Fig. 3. The torque limiter 17 includes a torque arm 171 consisting of a coupling portion 171b coupled to a rotation shaft of the drive side gear 24 and a rotation shaft of the intermediate gear 23, and an arm portion 171a projected from the coupling portion 171b; an open side spring means 172 that applies to the arm portion 171a a spring force P2' balanced with a force P2 acting in an engagement tangential direction of the intermediate gear 23 in proportion to a torque of a load at the time of the opening operation of the valve; a closure side spring means 173 that applies to the arm portion 171a a spring force P1' balanced with a force P1 acting in an engagement tangential direction of the intermediate gear 23 in proportion to a torque of a load at the time of the closing operation of the valve; an open side torque detection switch 175 operated by the arm portion 171a when a torque of a load at the time of the opening operation of the valve exceeds a predetermined value; an closure side torque detection switch 174 operated by the arm portion 171a when a torque of a load at the time of the closing operation of the valve exceeds a predetermined value; and a torque limiter shaft 176 that penetrates the open side spring means 172 and the closure side spring means 173. The torque limiter shaft 176 enables adjustment of each of the spring force P2' of the open side spring means 172 and the spring force P1' of the closure side spring means 173 from one end of the torque limiter shaft 176 (in the direction of Y in Fig. 4).

Although the coupling portion 171b of the torque arm 171 is coupled to the rotation shaft of the intermediate gear 23 and the rotation shaft of the drive side gear 24 in this example and the arm portion 171a is formed with the rotation shaft of the drive side gear 24 as a fulcrum, the position of the fulcrum is not limited to this position and may be any one point on an extended line acquired by extending the coupling portion 171b from the rotation shaft of the drive side gear 24.

The valve actuator 1 has an opening portion 27 on a side surface and one end of the torque limiter shaft 176 is disposed in the vicinity of the opening portion 27. Since a cover portion (not depicted) is removably attached to the opening portion 27 and, when adjusting the torque, simply removing the cover portion allows the adjustment of the different torque values for opening and closing from one end of the torque limiter shaft 176, the torque adjustment work can efficiently be performed in pre-shipment inspection after the completion of assembly or on site after delivery to a customer.

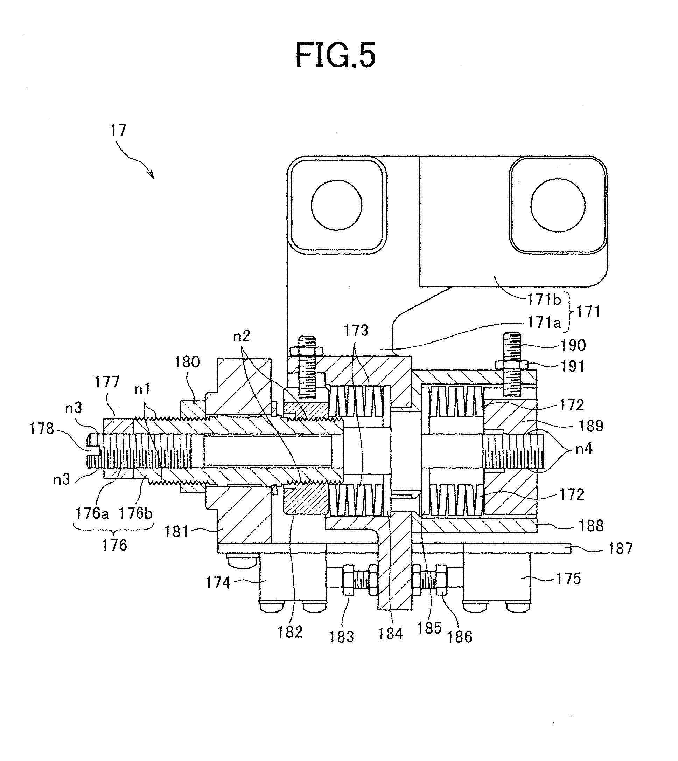

Fig. 5 is a diagram of a detailed exemplary configuration of the torque limiter 17 according to the present invention. In Fig. 5, the torque limiter 17 includes the torque arm 171, the open side spring means 172, the closure side spring means 173, the closure side torque detection switch 174, the open side torque detection switch 175, and the torque limiter shaft 176 depicted in Fig. 4 and also includes a shaft fixing nut 177, a knob nut 180, an adjustment screw mounting metal fitting 181, a closure side moving piece 182, a closure side signal generation adjustment screw 183, a closure side spring bearing 184, an open side spring bearing 185, an open side signal generation adjustment screw 186, a microswitch attachment plate 187, an open side spring bearing body 188, an open side moving piece 189, a piece rotation stopper 190, and a lock nut 191.

The closure side torque detection switch 174 and the open side torque detection switch 175 are attached to the microswitch attachment plate 187 and the torque limiter shaft 176 is fixed by means of the adjustment screw mounting bracket 181 to a casing of the valve actuator 1. The microswitch attachment plate 187 is screwed to the adjustment screw mounting bracket 181.

The open side spring means 172 is stored in the open side spring bearing body 188 and can expand and contract between the open side spring bearing 185 and the open side moving piece 189. The closure side spring means 173 can expand and contract between the closure side spring bearing 184 and the closure side moving piece 182. The open side spring means 172 and the closure side spring means 173 are made up of disc springs, for example, and integrally attached to the arm portion 171a of the torque arm 171.

The torque limiter shaft 176 is made up of an open side adjustment shaft 176a penetrating the open side moving piece 189 biased by the open side spring means 172, and a closure side adjustment shaft 176b disposed coaxially with the open side adjustment shaft 176a and penetrating the closure side moving piece 182 biased by the closure side spring means 173. The open side adjustment shaft 176a and the closure side adjustment shaft 176b are able to rotate independently of each other; the open side moving piece 189 is moved by rotating the open side adjustment shaft 176a to adjust the spring force of the open side spring means 172; and the closure side moving piece 182 is moved by rotating the closure side adjustment shaft 176b to adjust the spring force of the closure side spring means 173.

A method of adjusting torque values in both the opening and closing directions with the torque limiter 17 will hereinafter be described.

First, the shaft fixing nut 177 and the knob nut 180 are loosened. In the case of setting a torque value on the closure side, since threaded portions n1, n2 are formed on the closure side adjustment shaft 176b, this closure side adjustment shaft 176b is rotated in an axial direction by using a predetermined jig to move the closure side moving piece 182. As a result, the closure side spring means 173 is contracted and the spring force is changed to set the torque value on the closure side. In this example, the torque value increases when the closure side adjustment shaft 176b is rotated in the clockwise direction and the torque value decreases when the closure side adjustment shaft 176b is rotated in the counterclockwise direction.

In the case of setting a torque value on the open side, since threaded portions n3, n4 are formed on the open side adjustment shaft 176a, this open side adjustment shaft 176a is rotated in an axial direction with a predetermined jig, which is a slotted screwdriver in this example, fitted into a groove portion 178 to move the open side moving piece 189. As a result, the open side spring means 172 is contracted and the spring force is changed to set the torque value on the open side. In this example, the torque value increases when the open side adjustment shaft 176a is rotated in the clockwise direction and the torque value decreases when the open side adjustment shaft 176a is rotated in the counterclockwise direction.

In the above description, the piece rotation stopper 190 is disposed on the open side as a rotation stopping means to prevent the closure side moving piece 182 and the open side moving piece 189 from rotating together at the time of the torque adjustment. The piece rotation stopper 190 is fixed by means of the lock nut 191. The open side moving piece 189 has a groove formed with a screw width of the piece rotation stopper 190 and the piece rotation stopper 190 can be screwed into this groove and fixed by means of the lock nut 191 to prevent the closure side moving piece 182 and the open side moving piece 189 from rotating together due to the rotation of each other's shaft.

When the torque value of the open side is reached, the arm portion 171a of the torque arm 171 moves rightward in Fig. 5 and, therefore, the open side signal generation adjustment screw 186 pushes the open side torque detection switch (open side microswitch) 175. When the torque value of the closure side is reached, the arm portion 171a of the torque arm 171 moves leftward in Fig. 5 and, therefore, the closure side signal generation adjustment screw 183 pushes the closure side torque detection switch (closure side microswitch) 174. As a result, the air motor is stopped at the time of opening and closing of the valve. Since it is conceivable that the torque arm 171 is slightly moved at the time of the initial movement of the opening and closing, gaps are formed between the signal generation adjustment screws and push buttons of the microswitches to prevent false signal generation.

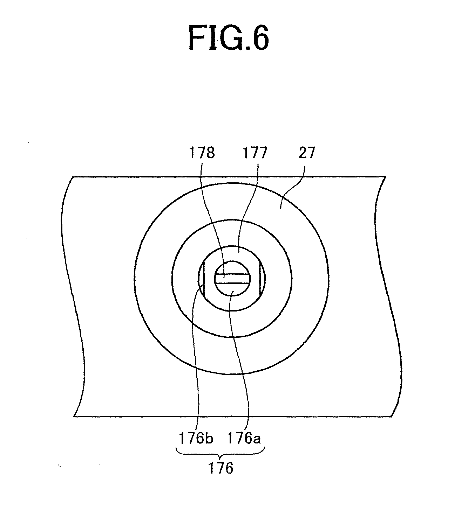

Fig. 6 is a diagram of the opening portion of the valve actuator 1 depicted in Fig. 4 when viewed from the direction of Y. As described above, one end of the torque limiter shaft 176 is disposed in the vicinity of the opening portion 27 of the valve actuator 1. A cover portion (not depicted) is removably attached to the opening portion 27 and, when adjusting the torque, simply removing the cover portion allows the adjustment of the different torque values for opening and closing from one end of the torque limiter shaft 176. Therefore, the torque adjustment work can efficiently be performed in pre-shipment inspection after the completion of assembly or on site after delivery to a customer.

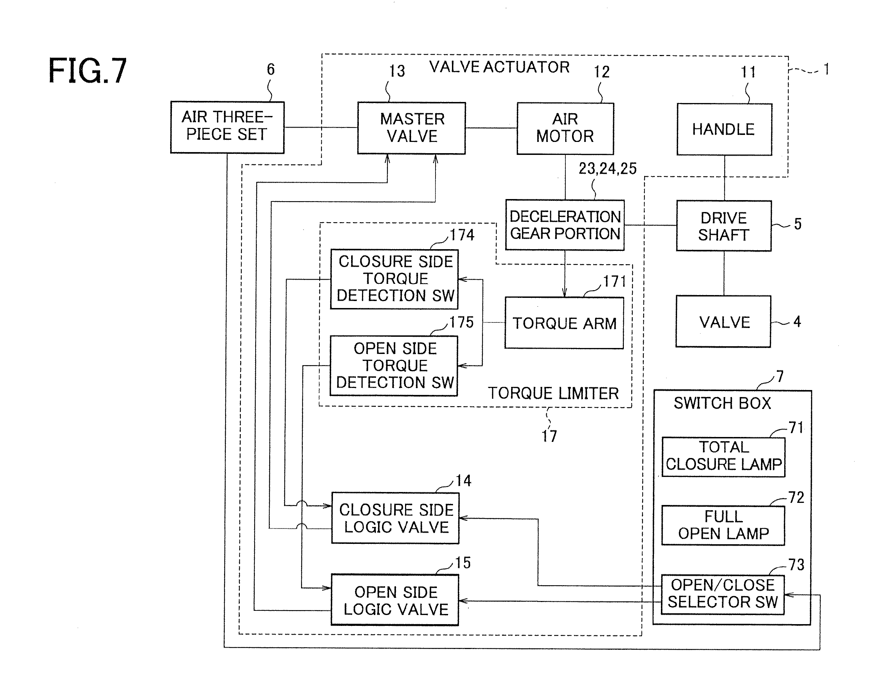

Fig. 7 is a block diagram of an exemplary configuration of a pneumatic valve control valve system including the valve actuator 1 to which the present invention is applied. In Fig. 7, 6 denotes an air three-piece set and 7 denotes a switch box. The air three-piece set 6 is made up of an air filter, a pressure reducing valve (regulator), and an oiler (lubricator) and is disposed in pneumatic piping for power. The switch box 7 is made up of a total closure lamp 71, a full open lamp 72, and an open/close selector switch 73 and is directly attached to or disposed remotely from the valve actuator 1.

If a user operates the open/close selector switch 73 toward the closure side of a valve 4, a closing operation signal is output to the closure side logic valve 14. When receiving this closing operation signal, the closure side logic valve 14 instructs the master valve 13 to drive the air motor 12 toward the closure side. The master valve 13 drives the air motor 12 toward the closure side in accordance with this instruction. A deceleration gear portion (the intermediate gear 23, the drive side gear 24, and the second gear 25) is rotated in association with the drive of the air motor 12 to rotate the load side drive shaft 5 coupled to these gears, causing the closing operation of the valve 4.

When a predetermined torque value on the closure side is reached, the torque arm 171 is moved via the deceleration gear portion (23, 24, and 25) to operate the closure side torque detection switch 174. The closure side torque detection switch 174 outputs a complete closure stop signal to the closure side logic valve 14 and the closure side logic valve 14 instructs the master valve 13 to stop the air motor 12. The master valve 13 stops the air motor 12 in accordance with this instruction to halt the rotation of the load side drive shaft 5. The completely closed position detection switch 19 (Fig. 3) outputs a complete closure signal to the switch box 7 to light the complete closure lamp 71.

If a user operates the open/close selector switch 73 toward the open side of the valve 4, an opening operation signal is output to the open side logic valve 15. When receiving this opening operation signal, the open side logic valve 15 instructs the master valve 13 to drive the air motor 12 toward the open side. The master valve 13 drives the air motor 12 toward the open side in accordance with this instruction. The deceleration gear portion (the intermediate gear 23, the drive side gear 24, and the second gear 25) is rotated in association with the drive of the air motor 12 to rotate the load side drive shaft 5 coupled to these gears, causing the opening operation of the valve 4.

When a predetermined torque value on the open side is reached, the torque arm 171 is moved via the deceleration gear portion (23, 24, and 25) to operate the open side torque detection switch 175. The open side torque detection switch 175 outputs a full open stop signal to the open side logic valve 15 and the open side logic valve 15 instructs the master valve 13 to stop the air motor 12. The master valve 13 stops the air motor 12 in accordance with this instruction to halt the rotation of the load side drive shaft 5. The fully opened position detection switch 20 (Fig. 3) outputs a full open signal to the switch box 7 to light the full open lamp 72.

EXPLANATIONS OF REFERENCE NUMERALS

1...valve actuator; 2...valve bonnet; 3...valve body; 4...valve disc; 5, 22...load side drive shaft; 6...air three-piece set; 7...switch; box; 11...handle; 12...air motor; 13...master valve; 14...closure side logic valve (LVC), 15...open side logic valve (LVO), 16...manual/automatic switching knob; 17...torque limiter; 18...indicating portion; 19...totally closed position detection switch; 20...fully opened position detection switch; 21...load side gear; 23...intermediate gear; 24...drive side gear; 25...second gear; 26...deceleration plate; 171...torque, arm; 172 ... pen side spring means; 173...closure side spring means; 174...closure side torque detection switch; 175...open side torque detection switch; and 176...torque limiter shaft.

Claims

1. A torque limiter built into a valve actuator that has a load side gear for rotating a load, a drive side gear for driving the load side gear, and an intermediate gear that transmits rotation of the drive side gear to the load side gear and controls a valve coupled via a drive shaft to the load side gear to open/close, and the torque limiter comprising:

a torque arm consisting of a coupling portion coupled to the drive side gear and the intermediate gear and an arm portion projected from the coupling portion; an open side spring means that applies to the arm portion a spring force balanced with a force acting in an engagement tangential direction of the intermediate gear in proportion to a torque of the load at the time of the opening operation of the valve; a closure side spring means that applies to the arm portion a spring force balanced with a force acting in an engagement tangential direction of the intermediate gear in proportion to a torque of the load at the time of the closing operation of the valve; an open side torque detection switch operated by the arm portion when a torque of the load at the time of the opening operation of the valve exceeds a predetermined value; an closure side torque detection switch operated by the arm portion when a torque of the load at the time of the closing operation of the valve exceeds a predetermined value; and a torque limiter shaft that penetrates the open side spring means and the closure side spring means, wherein
the torque limiter shaft enables adjustment of each of the spring force of the open side spring means and the spring force of the closure side spring means from one end of the torque limiter shaft.

2. The torque limiter as defined in claim 1, wherein the torque limiter shaft is made up of an open side adjustment shaft penetrating an open side moving piece biased by the open side spring means and a closure side adj ustment shaft disposed coaxially with the open side adjustment shaft and penetrating a closure side moving piece biased by the closure side spring means, and
the open side adjustment shaft and the closure side adjustment shaft are able to rotate independently of each other, the open side moving piece is moved by rotating the open side adjustment shaft to adjust the spring force of the open side spring means, and the closure side moving piece is moved by rotating the closure side adjustment shaft to adjust the spring force of the closure side spring means.

3. The torque limiter as defined in claim 2, comprising a rotation stopping means to prevent the closure side moving piece and the open side moving piece from rotating together.

4. A valve actuator that incorporates the torque limiter as defined in any one of claims 1 to 3.

5. The valve actuator as defined in claim 4, wherein an opening portion is disposed on a side surface, and one end of the torque limiter shaft is disposed in the vicinity of the opening portion.

# FIG.1

(A)

(B)

# FIG.2

FIG.3

# FIG.4

# FIG.5

# FIG.6

# FIG.7

EP 2 348 238 A1

# FIG.8

(A)
NORMAL ROTATION

(B)
TORQUE LIMIT
DETECTION

# FIG.9

# FIG.10

<table>
<tr><td colspan="2"><strong>INTERNATIONAL SEARCH REPORT</strong></td><td colspan="2">International application No.<br>PCT/JP2009/057866</td></tr>
</table>

| A. CLASSIFICATION OF SUBJECT MATTER |
|---|
| *F16K31/53*(2006.01)i |

According to International Patent Classification (IPC) or to both national classification and IPC

| B. FIELDS SEARCHED |
|---|
| Minimum documentation searched (classification system followed by classification symbols)<br>F16K31/53, F16D7/06, G01L3/14 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2008-151293 A (Yamatake Corp.),<br>03 July, 2008 (03.07.08),<br>Par. Nos. [0019] to [0081]; Figs. 1 to 7<br>& KR 10-2008-0057152 A & CN 101205978 A | 1-5 |
| A | JP 2004-19938 A (Kitz Corp.),<br>22 January, 2004 (22.01.04),<br>Par. Nos. [0001] to [0044]; Figs. 1 to 8<br>& US 2005/0184265 A1 & WO 2004/001262 A1<br>& CA 2490103 A & CN 1662763 A | 1-5 |
| A | JP 60-159462 A (Kohan Kogyo Co., Ltd.),<br>20 August, 1985 (20.08.85),<br>Page 2, lower left column, line 20 to lower<br>right column, line 7; Figs. 1 to 3<br>(Family: none) | 1-5 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>01 May, 2009 (01.05.09) | Date of mailing of the international search report<br>19 May, 2009 (19.05.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/057866 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 4-27834 A  (San'yo Obaru Mentenansu Kabushiki Kaisha, Kanto Obaru Sabisu Kabushiki Kaisha, Toshio SEO),<br>30 January, 1992 (30.01.92),<br>Figs. 1 to 4<br>(Family: none) | 1-5 |

Form PCT/ISA/210 (continuation of second sheet) (April 2007)

**EP 2 348 238 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7031090 A